**Europäisches Patentamt**

**European Patent Office**

**Office européen des brevets**

(19)

(11) Veröffentlichungsnummer: **0 245 832 B1**

# (12) EUROPÄISCHE PATENTSCHRIFT

(45) Veröffentlichungstag der Patentschrift:
04.07.90

(51) Int. Cl.⁵: **C08F 2/44, C08F 10/00**

(21) Anmeldenummer: **87106833.4**

(22) Anmeldetag: **12.05.87**

(54) **Verfahren zur Herstellung einer gefüllten Polyolefin-Formmasse.**

(30) Priorität: **14.05.86 DE 3616222**

(43) Veröffentlichungstag der Anmeldung:
**19.11.87 Patentblatt 87/47**

(45) Bekanntmachung des Hinweises auf die Patenterteilung:
**04.07.90 Patentblatt 90/27**

(84) Benannte Vertragsstaaten:
**BE DE ES FR GB IT NL SE**

(56) Entgegenhaltungen:
**EP-A- 0 167 000**
**DE-A- 2 459 118**
**GB-A- 2 028 842**

(73) Patentinhaber: **HOECHST AKTIENGESELLSCHAFT,
Postfach 80 03 20, D-6230 Frankfurt am Main 80(DE)**

(72) Erfinder: **Thum, Gerhard, Dr., Ginsterweg 10,
D-6238 Hofheim am Taunus(DE)**

## Beschreibung

Die vorliegende Erfindung betrifft ein Verfahren zur Herstellung einer gefüllten Polyolefin-Formmasse, die, gegebenenfalls nach Mischen mit weiteren Polymeren, zur Herstellung von gut wärmeleitenden und zugleich elektrisch isolierenden Formteilen für elektrische und elektronische Bauteile und Geräte verwendet werden kann.

Es ist bekannt, daß feste Füllstoffe, wie. z.B. anorganische oder organische Fasern, durch physikalische Methoden, wie Vermischen oder Coextrudieren, in Polyolefine eingearbeitet werden können. Bei hohem Füllstoffgehalt werden allerdings die mechanischen Eigenschaften der Polyolefin-Compounds nachteilig beeinflußt, da bei der Verarbeitung keine gleichmäßige Verteilung und dadurch auch keine feste Verbindung zwischen Polymer und festem Füllstoff errreicht wird. Zur Überwindung dieser Nachteile sind schon eine Reihe Vorschläge gemacht worden.

So ist ein Verfahren zur Herstellung von gefüllten Polyolefinmassen bekannt, bei welchem durch Polymerisation in Gegenwart des festen Füllstoffes eine bessere Haftung des Polyolefins auf der Oberfläche des Füllstoffes erreicht werden soll (vgl. DE-OS 24 59 118). Dabei werden als Füllstoffe bevorzug. Aluminiumsilikate oder Metalloxide eingesetzt, auf deren Oberfläche sich eine katalytisch aktive Übergangsmetallverbindung befindet. Nachteilig bei diesem Verfahren ist die unvollständige Belegung der Oberfläche des Füllstoffes mit dem Katalysator umd demzufolge auch eine unvollständige Umhüllung des Füllstoffes durch das Polyolefin.

Weiterhin ist bekannt ein Verfahren zur Polymerisation von Ethylen in Anwesenheit von Füllmaterialien, wie z.B. Metallen, Metalloxiden, organischen Pigmenten usw., bei welchem man zunächst einen löslichen Katalysator aus einer Übergangsmetallverbindung herstellt, anschließend den Füllstoff mit dem gelösten Katalysator kontaktiert und in einer weiteren Stufe die Polymerisation in Gegenwart des so behandelten Füllstoffes und einer aluminiumorganischen Verbindung als Aktivator durchführt (vgl. EP-OS 142 143). Gegebenenfalls kann vor der Kontaktierung des Füllstoffes mit der Übergangsmetallverbindung noch eine Behandlung mit einem Aluminiumalkyl erfolgen. Ein wesentlicher Nachteil bei diesem Verfahren liegt darin, daß neben füllstofffreiem Polymer noch polymerfreies Füllmaterial vorliegt. Weiterhin findet keine vollständige Umhüllung des Füllmaterials mit Polyethylen statt und außerdem läßt sich die Dicke des polymeren Überzugs nicht regeln.

Bekannt ist auch ein Verfahren zum Aufbringen polymerer Überzüge auf einem festen Füllstoff durch Behandeln des festen Füllstoffes mit a) einer metallorganischen Verbindung und b) einer aluminiumorganischen Verbindung (vgl. US-PS 3 503 785). Auch bei diesem Verfahren liegt viel freies Polymerisat neben polymerfreiem Füllstoff vor. Außerdem sind hohe Kontaktkonzentrationen erforderlich, was ein Auswaschen des Polymerisates von Restkatalysatorgehalten erforderlich macht.

Es ist auch bekannt, daß durch Aufbringen eines Katalysators auf die Oberfläche von festen Füllstoffen in der Gasphase einige der oben erwähnten Nachteile beseitigt werden können (DE-OS 29 36 892). Als Nachteil bei diesem Verfahren erweist sich neben der hohen Temperatur, daß die Polymerisation nicht nur auf der Oberfläche des festen Füllstoffes, sondern auch an den Wänden des Polymerisationsreaktors stattfindet, was einerseits zu größeren Belagsproblemen und andererseits nach Ablösen des Polymeren von der Reaktorwand zu freiem Polymer im Produkt führt.

Schließlich ist auch ein Verfahren beschrieben worden, bei welchem man die Oberfläche von Füllstoffen zunächst mit einer Aluminoxanlösung behandelt und anschließend nach Zugabe bestimmter, in Kohlenwasserstoffen löslicher Ti- oder Zr-Verbindungen die Polymerisation durchführt (vgl. DE-OS 32 40 382). Da der Katalysator nicht auf den Füllstoff aufgezogen wird, entsteht auch bei diesem Verfahren viel freies Polymerisat. Außerdem sind hohe Aluminoxankonzentrationen erforderlich und die verwendeten löslichen Übergangsmetallverbindungen sind vergleichsweise schwierig herstellbar.

Ferner ist ein Verfahren bekannt zur Herstellung wärmeleitender und elektrisch isolierender Thermoplaste, bei dem in Gegenwart von Aluminium oder von Aluminium enthaltender Legierungen Polyolefine mit einem bekannten, heterogenen Katalysatorsystem synthetisiert werden (vgl. EP-OS 167 000). Ein entscheidender Nachteil dieses Verfahrens ist es, daß der Katalysator während der Polymerisation heterogen in Suspension vorliegt und dadurch sehr viel aluminium-freies Polymer gebildet wird.

Somit was es wünschenswert, ein Verfahren zur Herstellung einer füllstoffhaltigen Polyolefin-Formmasse zu finden, bei welchem der Füllstoffgehalt in einem weiten Bereich variiert werden kann ohne Nachteile in den Materialeigenschaften bei sehr hohen Gehalten, bei welchem keine Belagsbildung im Polymerisationsreaktor auftritt, die Dicke des Polymer-Überzuges auf den Füllstoffteilchen mittels der Polymerisationsbedingungen eingestellt werden kann und kein füllstofffreies Polymer und kein polymerfreier Füllstoff in der Formmasse vorhanden sind.

Es wurde gefunden, daß die Aufgabe gelöst werden kann, wenn zunächst der Ziegler-Katalysator auf dem Füllstoff gebildet wird und dann der mit dem Katalysator beladene Füllstoff ohne Zusatz von weiterem Katalysator oder Aktivator zur Polymerisation verwendet wird.

Somit betrifft die Erfindung ein Verfahren zur Herstellung einer gefüllten Polyolefin-Formmasse, bestehend aus 5 bis 90 Gew.-% eines Homopolymerisats des Ethylens oder Propylens und/oder eines Copolymerisats von Ethylen und Propylen und 10 bis 95 Gew.-% eines pulvrigen Füllstoffes, durch Polymerisation von Ethylen und/oder Propylen bei einer Temperatur von 50 bis 110°C und einem Druck von mehr als 0 bis 12 bar in Gegenwart eines Katalysators, welcher aus einem Füllstoff mit einer katalytisch aktiven Oberfläche besteht, dadurch gekennzeichnet, daß die Polymerisation durchgeführt wird in Gegenwart eines Katalysators, welcher hergestellt wurde durch Kontaktieren des Füllstoffes in einem aliphatischen Kohlenwasserstoff

a) zunächst mit einer aluminiumorganischen Verbindung in einer Menge von 0,0001 bis 0,003 Mol pro Mol Füllstoff bei einer Temperatur von 0 bis 100°C während 5 bis 60 min, und dann mit

b) einer Halogenverbindung des Titans oder Zirkons in einer Menge von 0,00001 bis 0,0003 Mol pro Mol Füllstoff bei einer Temperatur von 0 bis 100°C während 5 bis 240 min,

und welcher in einen vom Katalysator-Herstellungsgefäß getrennten Reaktor überführt wird und verwendet wird ohne Zusatz von weiterem Katalysator oder Aktivator, wobei das zu polymerisierende Ethylen und/oder Propylen in einer Menge von 0,001 bis 0,01 Mol pro Mol Füllstoff und pro min Polymerisationszeit in den Reaktor eingeführt wird.

Ferner betrifft die Erfindung die nach diesem Verfahren hergestellte gefüllte Polyolefin-Formmasse.

Der für das erfindungsgemäße Verfahren zu verwendende Füllstoff ist eine Metallpulver oder Metalloxidpulver mit einem mittleren Korndurchmesser von 20 bis 800 µm, vorzugsweise 30 bis 100 µm. Geeignet sind beispielsweise Kupferpulver, Eisenpulver, Aluminiumpulver, Nickelpulver oder die pulverförmigen Oxide des Eisens oder Aluminiums. Bevorzugt sind Aluminiumpulver und Aluminiumoxidpulver, insbesondere Aluminiumpulver. Die erfindungsgemäß hergestellte Formmasse enthält 10 bis 95 Gew.-%, vorzugsweise 80 bis 95 Gew.-% des pulvrigen Füllstoffes und 5 bis 90, vorzugsweise 5 bis 20 Gew.-% eines Homopolymerisats des Ethylens oder Propylens und/oder eines Copolymerisats von Ethylen und Propylen.

Zunächst wird der pulvrige Füllstoff mit einer aluminiumorganischen Verbindung in Kontakt gebracht.

Dazu wird im allgemeinen der Füllstoff in einem Reaktionsgefäß unter Stickstoffatmosphäre in einem aliphatischen Kohlenwasserstoff, welcher durch Hydrieren von ungesättigten Verunreinigungen sowie schwefel- oder sauerstoffhaltigen Verbindungen befreit wurde, suspendiert und zur Entfernung von Sauerstoffspuren 5 bis 30 min intensiv gerührt. Für je 100 g Füllstoff werden 700 bis 1500 ml, vorzugsweise 800 bis 1100 ml, des Kohlenwasserstoffs, welcher beispielsweise n-Hexan, n-Heptan, eine Benzin- oder Dieselölfraktion sein kann, verwendet.

Sodann fügt man zu der Suspension des Füllstoffes eine aluminiumorganische Verbindung in einer Menge von 0,0001 bis 0,003, vorzugsweise 0,0002 bis 0,002 Mol pro Mol Füllstoff und rührt die Suspension bei einer Temperatur von 0 bis 100, vorzugsweise 15 bis 40°C während 5 bis 60, vorzugsweise 15 bis 30 min.

Als aluminiumorganische Verbindung sind geeignet halogenhaltige aluminiumorganische Verbindungen, wie Dialkylaluminiumhalogenide, Alkylaluminiumdihalogenide oder Alkylaluminiumsesquihalogenide, beispielsweise $(C_2H_5)_2AlCl$, $(i-C_4H_9)_2AlCl$, $C_2H_5AlCl_2$, $(C_2H_5)_3Al_2Cl_3$.

Weiterhin eignen sich die Umsetzungsprodukte von Aluminiumtrialkylen oder Aluminiumdialkylhydriden mit Kohlenwasserstoffresten mit 1 bis 6 Kohlenstoffatomen, vorzugsweise $Al(i-C_4H_9)_3$ oder $Al(i-C_4H_9)_2H$, mit 4 bis 20 Kohlenstoffatome enthaltenden Diolefinen, vorzugsweise Isopren. Beispielsweise sei Aluminiumisoprenyl genannt.

Andererseits eignen sich als aluminiumorganische Verbindungen auch Aluminiumtrialkyle oder Aluminiumalkylhydride mit gleichen oder verschiedenen Alkylresten mit 1 bis 16 Kohlenstoffatomen. Beispiele sind
$Al(C_2H_5)_3$, $Al(C_2H_5)_2H$, $Al(C_3H_7)_3$, $Al(C_3H_7)_2H$, $Al(i-C_4H_9)_3$, $Al(i-C_4H_9)_2H$, $Al(C_8H_{17})_3$, $Al(C_{12}H_{25})_3$, $Al(C_2H_5)$ $(C_{12}H_{25})_2$, $Al(i-C_4H_9)$ $(C_{12}H_{25})_2$.

Es können auch Mischungen von metallorganischen Verbindungen der I. bis III. Gruppe des Periodensystems, insbesondere Mischungen verschiedener aluminiumorganischer Verbindungen eingesetzt werden.

Beispielsweise seien folgende Mischungen genannt:
$Al(C_2H_5)_3$ und $Al(i-C_4H_9)_3$, $Al(C_2H_5)_2Cl$ und $Al(C_8H_{17})_3$, $Al(C_2H_5)_3$ und $Al(C_8H_{17})_3$, $Al(C_4H_9)_2H$ und $Al(C_8H_{17})_3$, $Al(i-C_4H_9)_3$ und $Al(C_8H_{17})_3$, $Al(C_2H_5)_3$ und $Al(C_{12}H_{25})_3$, $Al(i-C_4H_9)_3$ und $Al(C_{12}H_{25})_3$, $Al(C_2H_5)_3$ und $Al(C_{16}H_{33})_3$, $AlC_3H_7)_3$ und $Al(C_{18}H_{37})_2(iC_4H_9)$, $Al(C_2H_5)_3$ und Aluminiumisoprenyl (Umsetzungsprodukt von Isopren mit $Al(i-C_4H_9)_3$ oder $Al(i-C_4H_9)_2H$).

Von allen diesen Verbindungen werden bevorzugt verwendet Aluminiumtrialkyle und Dialkylaluminiumhalogenide, insbesondere Aluminiumtriethyl und Diethylaluminiummmonochlorid.

Es ist auch möglich, den Füllstoff zu der Lösung der aluminiumorganischen Verbindung zu geben.

Danach fügt man zu der Suspension eine Halogenverbindung des Titans oder des Zirkoniums, vorzugsweise des Titans, in einer Menge von 0,00001 bis 0,0003, vorzugsweise 0,00005 bis 0,0002 Mol pro Mol Füllstoff und rührt den Ansatz bei einer Temperatur von 0 bis 100, vorzugsweise 15 bis 40°C, während 5 bis 240, bevorzugt 90 bis 120 min.

Die halogenhaltige Titanverbindung ist beispielsweise
$TiCl_4$, $TiCl_3(O-n-C_3H_7)$, $TiCl_3(O-n-C_3H_7)$, $TiCl_2(O-n-C_3H_7)_2$, $TiCl(O-n-C_3H_7)_3$, $TiCl_2(O-i-C_3H_7)_2$, $TiCl_3(O-i-C_3H_7)$, $TiCl_3(O-CH_2C_6H_5)$, $TiCl_2(O-CH_2C_6H_5)_2$, $TiCl_3(O-i-C_4H_9)$ oder $TiCl_2(O-i-C_4H_9)_2$.

Besonders bevorzugt ist Titantetrachlorid.

Schließlich wird gegbenenfalls noch eine geringe Menge eines 1-Olefins oder Diolefins mit je 4 bis 10, vorzugsweise 4 bis 8, C-Atomen zu der Suspension gegeben, wobei man pro Mol Füllstoff 0,0005 bis 0,02, bevorzugt 0,002 bis 0,005 Mol des 1-Olefins oder Diolefins einsetzt und den Ansatz während 5 bis 240, vorzugsweise 50 bis 120 min bei einer Temperatur von 0 bis 100, bevorzugt 15 bis 40°C, intensiv rührt. Bei Verwendung eines Olefins oder Diolefins verkürzt sich die Rührzeit nach Zugabe der Ti- oder Zr-Verbindung auf 5 bis 60, vorzugsweise 15 bis 30 min, worauf das Olefin oder Diolefin zugefügt wird.

Der mit dem Katalysator beladene Füllstoff wird in Form der vorliegenden Suspension, oder auch nach Abtrennen von dem Suspensionsmittel zur Polymerisation von Ethylen und/oder Propylen verwendet. Dazu wird er in Form einer Suspension in den Polymerisationsreaktor überführt und die Polymerisation durch Zugabe von Ethylen und/oder Propylen gestartet. Es wird kein zusätzlicher Katalysator oder Aktivator in den Reaktor eingebracht.

Die Polymerisation wird bei einer Temperatur von 50 bis 100, vorzugsweise 70 bis 90°C, unter einem Druck von 0 bis 15, bevorzugt 1 bis 7 bar, durchgeführt.

Um eine feste und vollständige Umhüllung des Füllstoffes zu erreichen, wird das Monomere sehr langsam während des Polymerisationsprozesses in den Polymerisationsreaktor eingetragen. Dabei werden pro Mol an Füllstoff und pro 10 Minuten 0,01 bis 0,1 Mol, bevorzugt 0,02 bis 0,05 Mol Monomeres zugegeben.

Die Dicke des polymeren Überzuges und die Qualität des Polyolefins, wie Dichte oder Schmelzindex, lassen sich relativ leicht durch Variation der Polymerisationsparameter wie Zeit, Temperatur oder Druck regeln. Die Dichte des Polyolefins läßt sich dabei zusätzlich noch durch Variation der Mengen an Comonomeren einstellen.

Die auf diese Weise erhaltene erfindungsgemäß hergestellte Formmasse zeichnet sich dadurch aus, daß das Polyolefin fest auf der Oberfläche des Füllstoffes haftet, und daß dadurch gleichzeitig eine besonders gute Homogenität der Formmasse erreicht wird.

Ein wichtiger Unterschied gegenüber gefüllten Polyolefin-Formmassen des Standes der Technik ist darin zu sehen, daß eine hochgefüllte Formmasse mit einem Füllstoffgehalt größer 80 Gew.-% und bis zu 95 Gew.-% erhalten werden kann, die kein füllstoffreies Polymer und auch keinen polymerfreien Füllstoff mehr enthält. Weiterhin wird beim erfindungsgemäßen Verfahren jedes feste Füllstoffteilchen gleichmäßig vom entsprechenden Polyolefin umhüllt. Zusätzlich kann durch Einbau von Diolefinen, wie z.B. 1,7-Oktadien, während der Polymerisation das umhüllende Polymer vernetzt werden, woduch die Haftung des Polyolefins auf der Oberfläche des Füllstoffes weiter erhöht und die Homogenität der Formmasse noch weiter gesteigert werden kann.

Die erfindungsgemäß hergestellte Polyolefinformmasse kann zur besseren Verarbeitung, z.B. beim Extrudieren oder Spritzgießen, noch mit 2 bis 20 Gew.-%, vorzugsweise mit 10 bis 15 Gew.-%, eines weiteren Polymeren, wie z.B. Polyamid oder Polyester, gemischt werden.

Derartige Gemische enthalten dann noch bis zu 80 Vol-%, bevorzugt 40 bis 80 Vol-%, ganz besonders bevorzugt 60 bis 70 Vol-%, des festen Füllstoffes.

Aus der erfindungsgemäß hergestellten Formmasse, insbesondere aus solcher mit einem hohen Gehalt an Aluminiumpulver, lassen sich Formteile mit guter Wärmeleitfähigkeit bei gleichzeitig hohem elektrischen Durchgangswiderstand herstellen, die zur Herstellung von elektrischen und elektronischen Bauteilen und Geräten verwendet werden können.

## Beispiel 1

100 g pulvriges Aluminiumoxid mit einem mittleren Korndurchmesser von 100 μm wurden unter Stickstoffatomosphäre in 1000 ml Benzin (100/120) suspendiert und die Suspension 15 min intensiv gerührt. Dann wurde die Suspension mit 3 mMol Diethylaluminiumchlorid versetzt. Nach 15 min Rühren bei Raumtemperatur erfolgte die Zugabe von 0,3 mMol Titantetrachlorid. Die Suspension wurde nun 2 h bei 40°C gerührt, das aktivierte Aluminiumoxid abgetrennt und in einen 1,5 l Stahlautoklaven, der zuvor mit 1000 ml Benzin befüllt wurde, überführt. Nach Aufdrücken von 0,5 bar Stickstoff wurde langsam (etwa 2 g pro 10 min) Ethylen in den Polymerisationsreaktor eingebracht. Nach 100 min Polymerisationszeit bei 85°C isolierte man 121 g Produkt. Dies entspricht einem Füllstoffgehalt an Aluminiumoxid von 83 Gew.-%.

Das erhaltene Produkt zeichnete sich durch einen festen homogenen polymeren Überzug auf der Oberfläche eines jeden Aluminiumoxidteilchens aus. Beim Extrudieren wurde auch kein schichtweises Ablösen des polymeren Überzuges beobachtet.

## Beispiel 2

100 g Aluminiumpulver mit einem mittleren Korndurchmesser von 50 μm wurden unter Stickstoffatmosphäre in 1000 ml Benzin suspendiert und die Suspension mit 5 mMol Triethylaluminium versetzt. Nach 15 min Rühren bei Raumtemperatur erfolgte die Zugabe von 0,5 mMol Titantetrachlorid. Die Suspension wurde nun 2 h bei Raumtemperatur gerührt und anschließend in einen 1,5 l Stahlautoklaven überführt. Nach Aufdrücken von 0,5 bar Stickstoff wurde langsam (etwa 2 g pro 10 min) Ethylen in den Polymerisationsreaktor eingebracht. Nach 110 min Polymerisationszeit bei 85°C isolierte man 112 g Produkt. Dies entspricht einem Füllstoffgehalt an Aluminiumpulver von 89 Gew.-%

Das erhaltene Produkt zeichnete sich durch einen festen und homogenen polymeren Überzug auf der Oberfläche eines jeden Aluminiumteilchens aus. Beim Extrudieren wurde auch kein schichtweises Ablösen des polymeren Überzuges beobachtet.

## Beispiel 3

Es wurde analog Beispiel 2 verfahren, jedoch wurden anstelle von 5 mMol Triethylaluminium 4 mMol Diethylaluminiumchlorid eingesetzt. Man isolierte nach 95 min Polymerisationszeit 109 g Produkt. Dies entspricht einem Aluminiumgehalt von 92 Gew.-%.

## Beispiel 4

Man arbeitete analog Beispiel 1, jedoch wurden anstelle pulvrigem Aluminiumoxid 100 g Aluminiumpulver (60 μm) und anstelle 3 mMol Triethylaluminium 4 mMol Diethylaluminiumchlorid eingesetzt.

Nach Überführen des aktivierten Aluminiumpulvers in den 1,5 l Stahlautoklaven, der zuvor mit 1000 ml Benzin befüllt wurde, wurde 80 min bei 75°C polymerisiert. Man erhielt 110 g Produkt, was einem Gehalt an Aluminiumpulver von 91 Gew.-% entspricht.

Das erhaltene Produkt zeichnete sich durch einen festen und vollständigen polymeren Überzug auf der Oberfläche eines jeden Aluminiumteilchens aus.

Beispiel 5

100 g pulvriges Aluminiumoxid mit einem mittleren Korndurchmesser von 100 μm wurden unter Stickstoffatomosphäre in 1000 ml Benzin (100/120) suspendiert und die Suspension 15 min intensiv gerührt. Dann wurde die Suspension mit 3 mMol Triethylaluminium versetzt. Nach 15 min Rühren bei Raumtemperatur erfolgte die Zugabe von 0,3 mMol Titantetrachlorid. Nach weiteren 15 min Rühren bei Raumtemperatur wurden 2 ml Hexen der Suspension zugegeben. Die Suspension wurde nun 2 h bei 40°C gerührt, das aktivierte Aluminiumoxid abgetrennt und in einen 1,5 l Stahlautoklaven überführt. Nach Aufdrücken von 0,5 bar Stickstoff wurde langsam (etwa 2 g pro 10 min) Ethylen in den Polymerisationsreaktor eingebracht. Nach 120 min Polymerisationszeit bei 85°C isolierte man 125 g Produkt. Dies entspricht einem Füllstoffgehalt an Aluminiumoxid von 80 Gew.-%.

Das erhalten Produkt zeichnete sich durch einen festen homogenen polymeren Überzug auf der Oberfläche eines jeden Aluminiumoxidteilchens aus. Beim Extrudieren wurde auch kein schichtweises Ablösen des polymeren Überzuges beobachtet.

Beispiel 6

100 g Aluminiumpulver mit einem mittleren Korndurchmesser von 70 μm wurden unter Stickstoffatmosphäre in 1000 ml Benzin suspendiert und die Suspension mit 5 mMol Triethylaluminium versetzt. Nach 15 min Rühren bei Raumtemperatur erfolgte die Zugabe von 0,5 mMol Titantetrachlorid und nach weiteren 15 min Rühren bei Raumtemperatur die Zugabe von 4 ml Hexen. Die Suspension wurde nun 2 h bei Raumtemperatur gerührt und anschließend in einen 1,5 l Stahlautoklaven überführt. Nach Aufdrücken von 0,5 bar Stickstoff wurde langsam (etwa 2 g pro 10 min) Ethylen in den Polymerisationsreaktor eingebracht. Nach 90 min Polymerisationszeit bei 85°C isolierte man 115 g Produkt. Dies entspricht einem Füllstoffgehalt an Aluminiumpulver von 87 Gew.-%.

Das erhaltene Produkt zeichnete sich durch einen festen und homogenen polymeren Überzug auf der Oberfläche eines jeden Aluminiumteilchens aus. Beim Extrudieren wurde auch kein schichtweises Ablösen des polymeren Überzuges beobachtet.

Beispiel 7

Man verfuhr analog Beispiel 6, jedoch wurden statt 5 mMol Triethylaluminium 4 mMol Triethylaluminium und statt 4 ml Hexen 3 ml 1,7-Oktadien eingesetzt. Die Polymerisation während 100 min bei 80°C lieferte 114 g Produkt; dies entspricht einem Aluminiumgehalt von 86 Gew.-%. Eine Dichtebestimmung der Polyolefinformmasse ergab 1,95 g/cm³.

Durch Extraktion mit Xylol konnten 5 Gew.-% des aufpolymerisierten Polyethylens abgetrennt werden; dieses hatte eine Dichte von 0,97 g/cm³ und eine Viskositätszahl von 295 cm³/g.

Die Polymerumhüllung war auf der gesamten Oberfläche des festen Füllstoffes fest und gleichmäßig aufgebracht.

Beispiel 8

Es wurde analog Beispiel 6 gearbeitet, jedoch wurden statt 4 ml Hexen 4 ml Buten und 2 ml 1,7-Oktadien eingesetzt. Die Polymerisation erfolgte bei 75°C während 80 min und lieferte 108 g Produkt; dies entspricht einem Aluminiumgehalt von 92,5 Gew.-%.

Die Polymerumhüllung war auf der gesamten Oberfläche des Füllstoffes fest und gleichmäßig aufgebracht. Bei der Verarbeitung wurde kein Ablösen des polymeren Überzuges beobachtet.

Beispiel 9

Analog Beispiel 6 wurden 100 g Aluminiumpulver (70μm) unter Stickstoff in 1000 ml Benzin (100/120) suspendiert und 15 Minuten bei Raumtemperatur gerührt. Dann wurden 5 mMol Triethylaluminium zugesetzt. Nach 15 Minuten Rühren bei Raumtemperatur erfolgte die Zugabe von 0,5 mMol Titantetrachlorid. Die Suspension wurde weitere 90 Minuten bei Raumtemperatur und anschließend 30 Minuten bei 40°C gerührt.

Das aktivierte Aluminiumpulver wurde abgetrennt und in einem 1,5 l Stahlautoklaven, der zuvor mit 1000 ml Benzin befüllt wurde, überführt. Dann wurde bei 75°C 0,5 bar Stickstoff in den Autoklaven gedrückt und langsam (etwa 4 g pro 10 Minuten) Propylen in den Autoklaven eingebracht. Nacht 120 Minuten Polymerisation bei 85°C isolierte man 125 g Produkt. Dies entspricht einem Füllstoffgehalt an Aluminiumpulver von 80 Gew.-%.

**Patentansprüche**

1. Verfahren zur Herstellung einer gefüllten Polyolefin-Formmasse, bestehend aus 5 bis 90 Gew.-% eines Homopolymerisats des Ethylens oder Propylens und/oder eines Copolymerisats von Ethylen und Propylen und 10 bis 95 Gew.-% eines pulvrigen Füllstoffes, durch Polymerisation von Ethylen und/oder Propylen bei einer Temperatur von 50 bis 110°C und einem Druck von mehr als 0 bis 12 bar in Gegenwart eines Katalysators, welcher aus einem Füllstoff mit einer katalytisch aktiven Oberfläche besteht, dadurch gekennzeichnet, daß die Polymerisation durchgeführt wird in Gegenwart eines Katalysators, welcher hergestellt wurde durch Kontaktieren des Füllstoffes in einem aliphatischen Kohlenwasserstoff

a) zunächst mit einer aluminiumorganischen Verbindung in einer Menge von 0,0001 bis 0,003 Mol pro Mol Füllstoff bei einer Temperatur von 0 bis 100°C während 5 bis 60 min, und
b) dann mit einer Halogenverbindung des Titans oder Zirkons in einer Menge von 0,00001 bis 0,0003 Mol pro Mol Füllstoff bei einer Temperatur von 0 bis 100°C während 5 bis 240 min, und welcher in einen vom Katalysator-Herstellungsgefäß getrennten Reaktor überführt wird und verwendet wird ohne Zusatz von weiterem Katalysator oder Aktivator, wobei das zu polymerisierende Ethylen und/oder Propylen in einer Menge von 0,001 bis 0,01 Mol pro Mol Füllstoff und pro min Polymerisationszeit in den Reaktor eingeführt wird.

2. Verfahren nach Anspruch 1, dadurch gekennzeichnet, daß man die Polymerisation durchführt in Gegenwart eines Katalysators, welcher zusätzlich kontaktiert wurde mit einem 1-Olefine oder Diolefin mit je 4 bis 10 C-Atomen in einer Menge von 0,0005 bis 0,02 Mol pro Mol Füllstoff bei einer Temperatur von 0 bis 100°C während 5 bis 240 min.

3. Verfahren nach Anspruch 1, dadurch gekennzeichnet, daß
a) als aluminiumorganische Verbindung ein Aluminiumtrialkyl oder Dialkylaluminiumhalogenid,
b) als Halogenverbindung des Titans oder Zirkons eine Chlorverbindung des Titans
verwendet wird.

4. Verfahren nach Anspruch 1, dadurch gekennzeichnet, daß der zu verwendende pulvrige Füllstoff ein Aluminiumpulver oder ein Aluminiumoxidpulver mit einem mittleren Korndurchmesser von 20 bis 800 µm ist.

5. Gefüllte Polyolefin-Formmasse, bestehend aus 5 bis 90 Gew.-% eines Homopolymerisats des Ethylens oder Propylens und/oder eines Copolymerisats von Ethylen und Propylen und 10 bis 95 Gew.-% eines pulvrigen Füllstoffes, wobei jedes Füllstoffteilchen gleichmäßig vom Polyolefin umhüllt ist, hergestellt nach dem Verfahren gemäß Anspruch 1.

6. Polyolefin-Formmasse nach Anspruch 4, dadurch gekennzeichnet, daß sie zusätzlich 5 bis 20 Gew.-% eines weiteren Polymeren enthält.

7. Verwendung der nach Anspruch 1 hergestellten Polyolefin-Formasse zur Herstellung von Formteilen für elektrische oder elektronische Bauteile und Geräte.

## Claims

1. A process for the preparation of a filled polyolefin molding material comprising 5 to 90% by weight of a homopolymer of ethylene or propylene and/or a copolymer of ethylene and propylene, and 10 to 95% by weight of a pulverulent filler, by polymerization of ethylene and/or propylene at a temperature of 50 to 110°C and a pressure of more than 0 to 12 bar in the presence of a catalyst which comprises a filler having a catalytically active surface, wherein the polymerization is carried out in the presence of a catalyst which has been prepared by bringing the filler, in an aliphatic hydrocarbon, into contact
a) firstly with an organoaluminum compound in an amount of 0.0001 to 0.003 mole per mole of filler at a temperature of 0 to 100°C for 5 to 60 minutes, and
b) then with a halogen compound of titanium or zirconium in an amount of 0.0001 to 0.0003 mole per mole of filler at a temperature of 0 to 100°C for 5 to 240 minutes, and which is transferred into a reactor which is separated from the catalyst preparation vessel and is used without addition of further catalyst or actiator, the ethylene and/or propylene to be polymerized being introduced into the reactor in an amount of 0.001 to 0.01 mole per mole of filler and per minute of polymerization time.

2. The process as claimed in claim 1, wherein the polymerization is carried out in the presence of a catalyst which has, in addition, been brought into contact with a 1-olefin or diolefin, in each case having 4 to 10 carbon atoms, in an amount of 0.0005 to 0.02 mole per mole of filler, at a temperature of 0 to 100°C for 5 to 240 minutes.

3. The process as claimed in claim 1, wherein
a) the organoaluminum compound is a trialkylaluminum or dialkylaluminum halide,
b) the halogen compound of titanium or zirconium is a chlorine compound of titanium.

4. The process as claimed in claim 1, wherein the poulverulent filler to be used is an aluminum powder or an aluminum oxide powder having an average grain diameter of 20 to 800 µm.

5. A filled polyolefin molding material prepared by the process as claimed in claim 1 and comprising 5 to 90% by weight of a homopolymer of ethylene or propylene and/or a copolymer of ethylene and propylene, and 10 to 95% by weight of a pulverulent filler, each filler particle being coated evenly by the polyolefin.

6. A polyolefin molding material as claimed in claim 5, which additionally contains 5 to 20% by weight of a further polymer.

7. The use of a polyolefin molding material prepared as claimed in claim 1 for the preparation of molded parts for electrical or electronic components and equipment.

## Revendications

1 Procédé pour préparer une matière à mouler polyoléfinique chargée, constituée de 5 à 90% en poids d'un homopolymère de l'éthylène ou du propylène et/ou d'un copolymère de l'éthylène et du propylène, et de 10 à 95% en poids d'une charge pulvérulente, par polymérisation de l'éthylène et/ou du propylène à une température de 50 à 110°C et sous une pression de plus de 0 à 12 bar, en présence d'un catalyseur constitué d'une charge dont la surface a une activité catalytique, procédé caractérisé en ce qu'on effectue la polymérisation en présence d'un catalyseur que l'on a préparé en mettant la charge en contact, dans un hydrocarbure aliphatique, d'abord avec:
a) un composé organo-aluminique en une quantité de 0,0001 à 0,003 mol par mole de la charge, à une température de 0 à 100°C, pendant 5 à 60 minutes, puis avec:
b) un composé halogéné du titane ou du zirconium en une quantité de 0,0001 à 0,0003 mol par mole de la charge, à une température de 0 à 100°C, pendant 5 à 240 minutes, et qui est transféré dans und réacteur séparé du récipient ayant servi à préparer le catalyseur, et est utilisé sans addition d'un catalyseur supplémentaire ni d'un activeur, l'éthylène et/ou le propylène à polymériser étant introduits dans le réacteur en une quantité comprise entre 0,001 et 0,01 mol par mole de la charge et par minute du temps de la polymérisation.

2. Procédé selon la revendication 1 caractérisé en ce qu'on effectue la polymérisation en présence d'un catalyseur que l'on a en outre mis en contact pendant 5 à 240 minutes, à une température de 0 à 100°C, avec une a-oléfine ou une dioléfine contenant chacune de 4 à 10 atomes de carbone, en une quantité de 0,0005 à 0,02 mol par mole de la charge.

3. Procédé selon la revendication 1, caractérisé en ce qu'on utilise:

a) comme composé organo-aluminique, un trialkyl-aluminium ou un halogénure de dialkyl-aluminium,

b) comme composé halogéné du titane ou du zirconium, un composé chloré du titane.

4. Procédé selon la revendication 1 caractérisé en ce que la charge pulvérulente à utiliser est une poudre d'aluminium ou une poudre d'oxyde d'aluminium ayant une granularité moyenne de 20 à 800 μm.

5. Matière à mouler chargée à base de polyoléfines, constituée de 5 à 90% en poids d'un homopolymère de l'éthylène ou du propylène, et/ou d'un copolymère de l'éthylène et du propylène, et de 10 à 95% en poids d'une charge pulvérulente, chaque particule de la charge étant uniformément enrobée par la polyoléfine, matière à mouler qui a été préparée par le procédé de la revendication 1.

6. Matière à mouler à base de polyoléfines selon la revendication 5, caractérisée en ce qu'elle contient en outre de 5 à 20% en poids d'un autre polymère.

7. Application de la matière à mouler polyoléfinique qui a été préparée selon la revendication 1 à la fabrication d'objets moulés pour des composants ou des appareils électriques ou électroniques.